**Europäisches Patentamt**

**European Patent Office**

**Office européen des brevets**

(19)

(11) Veröffentlichungsnummer : **0 459 000 B1**

(12) # EUROPÄISCHE PATENTSCHRIFT

(45) Veröffentlichungstag der Patentschrift :
**06.09.95 Patentblatt 95/36**

(51) Int. Cl.⁶ : **H04B 7/08**

(21) Anmeldenummer : **90110392.9**

(22) Anmeldetag : **31.05.90**

(54) **Kombinationsschaltung bei Raumdiversityempfang.**

(43) Veröffentlichungstag der Anmeldung :
**04.12.91 Patentblatt 91/49**

(45) Bekanntmachung des Hinweises auf die
Patenterteilung :
**06.09.95 Patentblatt 95/36**

(84) Benannte Vertragsstaaten :
**CH DE GB IT LI NL**

(56) Entgegenhaltungen :
**DE-A- 3 413 273**
**GB-A- 880 673**
**US-A- 4 354 276**

(73) Patentinhaber : **SIEMENS**
**AKTIENGESELLSCHAFT**
**Wittelsbacherplatz 2**
**D-80333 München (DE)**

(72) Erfinder : **Betzl, Hermann, Dipl.-Ing.**
**Enzianstrasse 9**
**D-8122 Penzberg (DE)**
Erfinder : **Nossek, Josef A. Prof. DI. techn.**
**Blütenstrasse 65a**
**D-8127 Iffeldorf (DE)**

EP 0 459 000 B1

EP 0 459 000 B1

**Beschreibung**

Die Erfindung bezieht sich auf eine Kombinationsschaltung für die über eine Haupt- und eine Diversityantenne einer Richtfunkstrecke von vielstufigen Ein- und Zweiträgersystemen empfangenen Signale, unter Verwendung des Maximum-Power-Verfahrens, bei dem die Phase eines der Signale so verändert wird, daß die Leistung des anschließend gebildeten Summensignals möglichst groß ist, und mit einer Regelschaltung für die Kombinationsphase.

Diese gebräuchlichste Art der Kombination von Haupt- und Diversityempfangssignalen ist beispielsweise in dem Artikel "Maximum Power and Amplitude-Egualizing Algorithmus for Phase Control in Space Diversity Combining" von P.D. Karabinis beschrieben, erschienen in B.S.T.J. Vol. 62, No. 1, Januar 1983, Seiten 63-189.

Dieses Verfahren ist günstig in Fällen von reinem Flachschwund (frequenzunabhängige Dämpfung der Empfangssignale), nicht jedoch in Fällen mit selektivem Schwund (frequenzabhängige Dämpfung) der Empfangssignale. Im letzteren Fall kann die Kombination nach dem Maximum-Power-Prinzip zu einem zwar leistungsstarken, jedoch übermäßig verzerrten Empfangssignal führen. Es empfiehlt sich deshalb ein zweites Kombinationsverfahren, bei dem das Kriterium für die Kombinationsphase der minimale Frequenzgang des summierten Ausgangssignals ist. Die sogenannte Minimum-Dispersion-Kombinationsmethode ist in dem Aufsatz "A Minimum Dispersion Combiner for High-Capacity Digital Microwave Radio" von S.Komaki et al. beschrieben, erschienen in IEEE Trans. Commun., Vol. Com -32, April 1984, Seiten 419-428.

Auch dieses Verfahren hat Nachteile, indem nämlich bei dem Versuch, den Frequenzgang des Summensignals klein zu machen, der Signalpegel so weit absinken kann, daß ein Empfangsausfall eintritt.

Es gibt daher auch Vorschläge, entweder das Minimum-Dispersion-Verfahren mit dem Maximum-Power-Verfahren zu verknüpfen, indem bei schlechtem Signal/Noise-Verhältnis auf Maximum-Power umgeschaltet wird (vgl. hierzu EP 0 128 812 A2), oder indem aus dem gemessenen Empfangsparameter eine Bewertungsgröße errechnet wird, die man durch probeweises Ändern der Phase zu verbessern sucht. Letzteres Verfahren ist beispielsweise bekannt durch "A New Approach to Space Diversity Combining in Microwave Digital Radio" von Y.S. Yeh, L.J. Greenstein, erschienen in AT&T Tech.

Journal, Vol. 64, No. 4, April 1985, Seiten 885-905. Im Gegensatz zum Maximum-Power-Verfahren muß hierbei die Phase probeweise verändert werden, d.h. zeitweise auch in die falsche Richtung, um das Optimum zu finden.

Bei einem Richtfunksystem mit Raumdiversityempfang sollen die über die Haupt- und Diversityantenne der Richtfunkstrecke empfangenen Signale im Empfänger nach Möglichkeit so kombiniert werden, daß die BER (Bit Error Ratio) des demodulierten digitalen Signals möglichst klein wird und dadurch gleichzeitig die Anzahl der Ausfälle (mit BER > $10^{-3}$) des Empfangssignals minimiert wird. Eine möglichst effektive Kombination der empfangenen Signale wird umso notwendiger, je höher die Stufenzahl des Systems (z.B. 64 QAM) und je größer die Bandbreite ist. Beim geplanten Einsatz von Zweiträgersystemen ist die Empfangssignalbreite wegen der zwei nebeneinander liegenden Teilbänder etwa doppelt so groß wie bei den bisherigen Einträgersystemen. Aus Aufwand- und Kostengründen ist es jedoch wünschenswert, beide Teilbänder gemeinsam in einem geeigneten Kombinator zu verarbeiten.

Durch die DE-A-3 413 273 ist ein ZF-Kombinator bekannt, bei dem aus den Empfangswegen ausgekoppelte Signale zu zwei durch je eine Regelschaltung auf konstante Ausgangsspannung geregelte Verstärker geführt werden, die einen Phasenvergleicher ansteuern. Dessen Ausgangssignal wird einer Phasensteuerung zugeführt, die daraufhin einen Phasenschieber entsprechend einstellt.

In der US-A- 4 354 276 ist ein Kombinator beschrieben, bei dem aus dem Hauptsignal- und Diversitysignalweg ausgekoppelte Signale einem Kombinator zugeführt werden, dessen Ausgangssignal auf einen Prozessor gelangt. In diesem wird das kombinierte Signal des Kombinators über Bandpaßfilter auf einen ersten Signalweg und einen zweiten Signalweg aufgeteilt.

Der Erfindung liegt die Aufgabe zugrunde, das mit zunehmender Bandbreite und Stufenzahl der Signale, besonders bei selektivem Schwund immer schlechter werdende Maximum-Power-Kombinationsverfahren zu verbessern.

Diese Aufgabe wird gemäß der Erfindung in der Weise gelöst, daß die Regelschaltung aus einer ein Phasenglied in einem Empfangsweg ansteuernden Maximum-Power-Regelschaltung und zwei zwischen Hauptsignalpfad bzw. Diversitysignalpfad und Maximum-Power-Regelschaltung eingeschalteten ergänzenden Schaltungen mit jeweils zwei parallelen Zweigen zur Änderung der Amplituden von Haupt- und Diversitysignalen besteht und die Amplitudenänderung der zu kombinierenden Spektren von Haupt- und Diversitykanal in der Weise erfolgt, daß die Signalspektren durch jeweils identisch gleiche Bandpässe für die unteren und identisch gleiche Bandpässe für die oberen Spektrumshälften in den betreffenden Zweigen der beiden ergänzenden Schaltungen gesplittet und die Leistungen der einzelnen Teilspektren an den Ausgängen der Bandpässe gemessen und jeweils durch Anheben des leistungsschwächeren oder Dämpfung des lei-

2

stungsstärkeren Teilspektrums auf etwa gleiche Werte oder einen etwas höheren Wert des leistungsschwächeren Teilspektrums eingestellt werden.

Mit dieser Lösung werden die eingangs genannten Schwierigkeiten umgangen, indem nämlich das Maximum-Power-Prinzip formal beibehalten wird, jedoch die zu kombinierenden Spektren, die der Maximum-Power-Regelschaltung zugeführt werden, gezielt in ihrer Amplitude geändert werden. Dies ist darin begründet, daß bei der Maximum-Power-Kombination Spektrumsabschnitte, in denen beide Signale, nämlich das Haupt- und Diversitysignal, eine hohe Amplitude haben, bei der Kombination bevorzugt werden gegenüber Abschnitten mit schwachen Signalen. Die Leistung erreicht nämlich ihr Maximum, wenn vor allem die Abschnitte mit hoher Amplitude phasenrichtig addiert werden. Demgegenüber ändert eine in der Phase schlechte Addition von Spektrumsabschnitten mit kleinen Amplituden die Gesamtleistung nur wenig. Die Abschnitte mit kleinen Amplituden sollten jedoch bei der Kombination nicht noch weiter abgeschwächt werden. Die erfindungsgemäße Kombinationsschaltung verknüpft in ihrer Wirkung das Maximum-Power mit dem Minimum-Dispersion-Prinzip. Sie vermeidet dabei die Nachteile des letzteren Prinzips, arbeitet mit dem zielgerichteten Einstellverfahren der Maximum-Power-Methode für die Kombinationsphase und schließt die sonst gegebene Möglichkeit eines zu starken Absinkens des Signals am Kombinatorausgang aus.

Vorteilhaftee Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispiels näher erläutert.

Es zeigen

Fig. 1      die Kombinationsschaltung im Blockschaltbild,
Fig. 2      in einem Diagramm die Selektion der Teilbandspektren bei einem Zweiträgersystem und
Fig. 3      in einem Diagramm die Selektion der Teilbandspektren bei einem Einträgersystem.

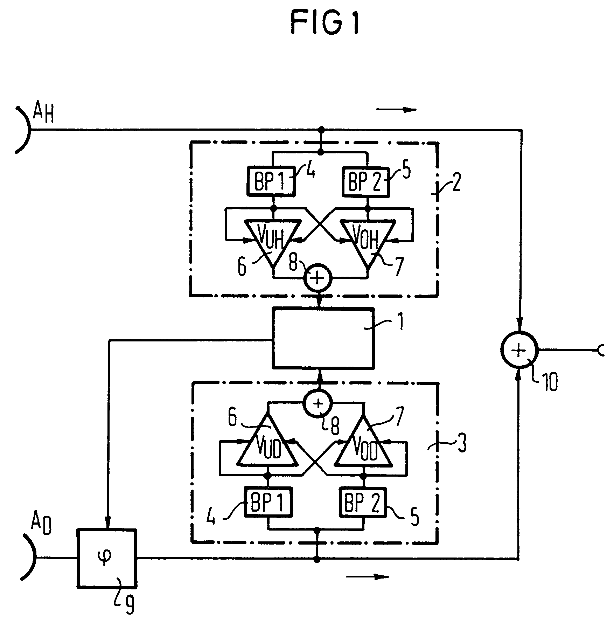

Die in Figur 1 dargestellte Regelschaltung für die Kombinationsphase besteht aus einer bekannten Maximum-Power-Regelschaltung 1, die geschlossen umrandet ist, und zwei vorgeschalteten, jeweils strichliert umrandeten ergänzenden Schaltungen 2,3 zur Änderung der Amplituden von Haupt- und Diversitysignal. Haupt- und Diversitysignal werden von der jeweiligen Antenne $A_H$ bzw. $A_D$ über den Hauptsignalpfad und den Diversitysignalpfad zu einem Additionsglied 10 geführt. Im Diversitysignalpfad ist ein Phasenglied 9 eingeschaltet, das von der Maximum-Power-Phasenregelung 1 angesteuert wird. Der Maximum-Power-Phasenregelung 1 werden die Ausgangssignale der beiden zwischen Hauptsignalpfad bzw. Diversitysignalpfad und Maximum-Power-Phasenregelung 1 eingeschalteten ergänzenden Schaltungen 2,3 zugeführt. Die Schaltungen 2,3 zur Änderung der Amplituden von Haupt- und Diversitysignal sind gleichartig aufgebaut und bestehen aus jeweils zwei parallel liegenden Zweigen. Der eine Zweig der Schaltungen enthält einen Bandpaß 4 für die unteren Spektrumshälften und einen nachfolgenden Verstärker 6, der andere Zweig einen Bandpaß 5 für die oberen Spektrumshälften und einen nachfolgenden Verstärker 7. Die Ausgänge der Verstärker 6 und 7 sind über ein Additionsglied 8 zusammengeführt.

Die Amplitudenänderung von Haupt- und Diversitykanalspektrum wird folgendermaßen erreicht: Die Signalspektren werden durch die jeweils identisch gleichen Bandpässe - 4 (BP1) für die unteren Spektrumshälften, 5 (BP2) für die oberen Spektrumshälften - gesplittet. Die Leistungen der einzelnen Teilbänder werden an den Ausgängen der Bandpässe gemessen und sind mit $P_{UH}$, $P_{OH}$, $P_{UD}$, $P_{OD}$ bezeichnet. Über die Verstärker 6 ($V_{UH}$, $V_{UD}$) und 7 ($V_{OH}$, $V_{OD}$) wird jeweils das leistungsschwächere der beiden Teilbänder angehoben, bis es in der Leistung gleich oder etwas stärker als das andere Teilband ist. Genauso kann natürlich das leistungsstärkere Teilband gedämpft werden.

Wählt man z.B. $V_{OH} = V_{OD} = 1$ und verstärkt/bedämpft jeweils die unteren Teilbänder, dann gilt:

$$V_{UH} \;=\; (P_{OH} / P_{UH})^x \text{ und } V_{UD} \;=\; (P_{UD} / P_{OD})^x.$$

Die Leistungen an den Verstärkerausgängen sind dann:

$$P_{OH}{}^* \;=\; P_{OH}\,; \quad P_{UH}{}^* \;=\; V_{UH}{}^2\, P_{UH} \;=\; (P_{OH}/P_{UH})^{2X}\, P_{UH}$$
$$P_{OD}{}^* \;=\; P_{OD}\,; \quad P_{UD}{}^* \;=\; V_{UD}{}^2 \cdot P_{UD} \;=\; (P_{UD}/P_{OD})^{2x} \cdot P_{UD}$$

Für $x = 0{,}5$ gilt strenge Leistungsangleichung:

$P_{UD}{}^* = P_{UD}$ ; $P_{UH}{}^* = P_{OH}$. $x > 0{,}5$ ergibt eine Überhöhung des schwächeren Teilbandes. Die Teilbänder werden nach der Leistungsangleichung summiert und der Maximum-Power-Phasenregelung zugeführt.

Die Simulation eines 64 QAM Zweiträgersystems brachte die besten Ergebnisse mit zweikreisigen Bandpässen, die nur einen Teil der oberen bzw. unteren Spektrumshälfte durchlassen und bei einer leichten Überanhebung ($x = 0{,}6$) des schwächeren Teilbandes.

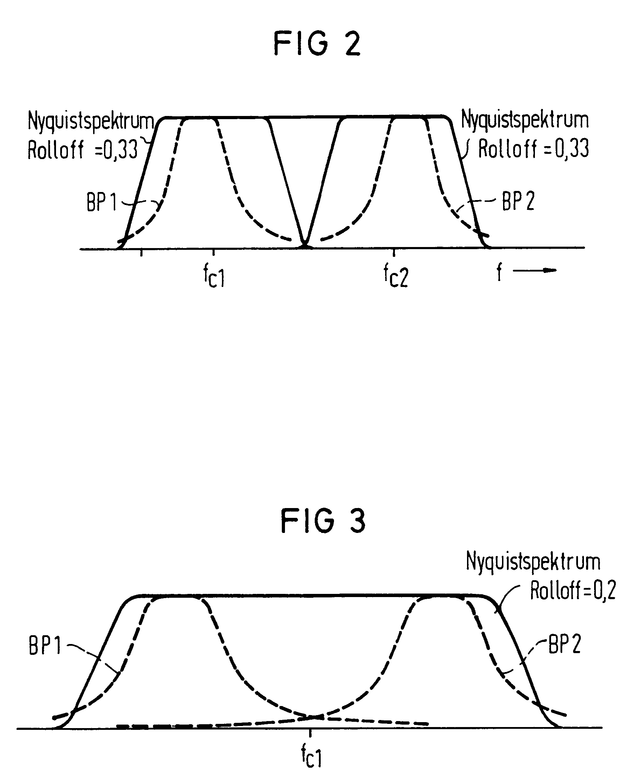

In Figur 2 ist die Selektion der Teilbandspektren mit den Bandpässen BP1 und BP2 für ein Zweiträgersystem graphisch dargestellt. Dabei ist das Nyquistspektrum mit durchgehenden Linien eingezeichnet, das jeweils in diesem Bereich liegende Teilbandspektrum der beiden Bandpässe strichliert.

Weitere Simulationen ergeben auch für 64 QAM und 256 QAM-Einträgersysteme eine Abnahme der Systemausfälle, besonders bei überwiegend selektivem Schwund, wenn mit Bandpässen, wie in Fig. 3 skizziert, Teilsprektren selektiert werden und das jeweils schwächere Teilspektrum in seiner Leistung etwas über die Leistung des stärkeren Teilspektrums angehoben wurde.

Die Maximum-Power-Kombinationsphase $\varphi$ kann theoretisch nach folgender Beziehung berechnet werden:

$$\varphi = \arctan \left| \frac{\int |Sny| |H_H| |H_D| \sin(\varphi_H - \varphi_D) df}{\int |Sny| |H_H| |H_D| \cos(\varphi_H - \varphi_D) df} \right|$$

$|SNY|$ = Nyquistspektrum der übertragenen Einzelimpulse
$|H_H|$ = Betrag der Übertragungsfunktion des Hauptkanals
$|H_D|$ = Betrag der Übertragungsfunktion des Diversitykanals
$\varphi_H$ = Phase der Übertragungsfunktion des Hauptkanals
$\varphi_D$ = Phase der Übertragungsfunktion des Diversitykanals.

Bei Verwendung jeweils gleicher Bandpässe im Phasenmeßzweig des Haupt- und Diversitykanals, wie dies in Figur 1 gezeigt ist, ändern sich die Phasen der Spektren, die der Maximum-Power-Phasenregelung zugeführt werden, um jeweils denselben Wert. Die Differenz $\varphi_H^* - \varphi_D^*$ bleibt jedoch unverändert. Die Wirkung der Schaltung zur Leistungsangleichung erstreckt sich allein auf die Amplituden (Beträge). Zur Berechnung der sich mit der Schaltung von Fig. 1 einstellenden Kombinationsphasen sind die Beträge der Haupt- und Diversitykanal-Übertragungsfunktionen durch $|H_H^*| = |H_H \cdot (H_{BP1} + H_{BP2})|$ und $|H_D^*| = |H_D \cdot (H_{BP1} + H_{BP2})|$ in der Phasenformel zu ersetzen.

## Patentansprüche

1. Kombinationsschaltung für die über eine Haupt- und eine Diversityantenne ($A_H$ bzw. $A_D$) einer Richtfunkstrecke von vielstufigen Ein- und Zweiträgersystemen empfangenen Signale, unter Verwendung des Maximum-Power-Verfahrens, bei dem die Phase eines der Signale so verändert wird, daß die Leistung des anschließend gebildeten Summensignals möglichst groß ist, dadurch **gekennzeichnet,** daß die Regelschaltung aus einer ein Phasenglied (9) in einem Empfangsweg ansteuernden Maximum-Power-Regelschaltung (1) und zwei zwischen Hauptsignalpfad bzw. Diversitysignalpfad und Maximum-Power-Regelschaltung eingeschalteten ergänzenden Schaltungen (2, 3) mit jeweils zwei parallelen Zweigen zur Änderung der Amplituden von Haupt- und Diversitysignalen besteht und die Amplitudenänderung der zu kombinierenden Spektren von Haupt- und Diversitykanal in der Weise erfolgt, daß die Signalspektren durch jeweils identisch gleiche Bandpässe (BP1) für die unteren und identisch gleiche Bandpässe (BP2) für die oberen Spektrumshälften in den betreffenden Zweigen der beiden ergänzenden Schaltungen (2, 3) gesplittet und die Leistungen der einzelnen Teilspektren an den Ausgängen der Bandpässe (BP1 bzw. BP2) gemessen und jeweils durch Anheben des leistungsschwächeren oder Dämpfung des leistungsstärkeren Teilspektrums auf etwa gleiche Werte oder einen etwas höheren Wert des leistungsschwächeren Teilspektrums eingestellt werden.

2. Kombinationsschaltung nach Anspruch 1, **gekennzeichnet** durch die Verwendung zweikreisiger Bandpässe, die lediglich einen Teil der oberen bzw. der unteren Spektrumshälfte durchlassen

3. Kombinationsschaltung nach Anspruch 2, dadurch **gekennzeichnet,** daß das schwächere Teilspektrum leicht überangehoben wird.

## Claims

1. Combination circuit for the signals which are received via a main antenna ($A_H$) and a diversity antenna ($A_D$) of a directional radio link of multistage single-carrier and two-carrier systems, using the maximum power method, in the case of which the phase of one of the signals is changed such that the power of the subsequently formed sum signal is as great as possible, characterized in that the control circuit comprises a maximum power control circuit (1), which drives a phase element (9) in a reception path, and two supplementary circuits (2, 3), which are connected between the main signal path and, respectively, the diversity signal path and the maximum power control circuit and each have two parallel paths for changing the amplitudes of main signals and diversity signals, and the amplitude change of the spectra, which are to be combined, of the main channel and diversity channel is carried out in such a manner that the signal spectra are split by bandpass filters (BP1), which are in each case identical, for the lower spectrum halves and identical bandpass filters (BP2) for the upper spectrum halves into the relevant paths for the two supplementary circuits (2, 3), and the powers of the individual spectrum elements at the outputs of the bandpass filters (BP1 and BP2, respectively) are measured and are set to approximately the same values or to a somewhat higher value of the spectrum element whose power is weaker, in each case by increasing the power of the spectrum element whose power is weaker or by attenuating the spectrum element whose power is stronger.

2. Combination circuit according to Claim 1, characterized by the use of two-circuit bandpass filters which pass only a part of the upper or lower spectrum half respectively.

3. Combination circuit according to Claim 2, characterized in that the weaker spectrum element is slightly exaggerated.

**Revendications**

1. Circuit combinatoire pour les signaux, qui sont reçus par l'intermédiaire d'une antenne principale et d'une antenne à diversité ($A_H$ ou $A_D$) d'une section hertzienne comportant un grand nombre de systèmes à porteuse unique et à deux porteuses, moyennant l'utilisation du procédé à puissance maximale, selon lequel la phase de l'un des signaux est modifiée de telle sorte que la puissance du signal somme formé ensuite est aussi élevée que possible, caractérisé par le fait que le circuit de régulation est constitué par un circuit de régulation de puissance maximale (1), qui commande un circuit de phase (9) dans une branche de réception, et des circuits de complément (2,4), qui sont branchés entre la voie de transmission du signal principal ou la voie de transmission du signal de diversité et le circuit de régulation de puissance maximale, et comportant respectivement deux branches parallèles pour modifier les amplitudes du signal principal et du signal de diversité, et la modification d'amplitude des spectres devant être combinés du canal principal et du canal de diversité s'effectue de telle sorte que les spectres des signaux sont divisés par des filtres passe-bande respectivement identiques (BP1) pour les moitiés inférieures du spectre et par l'intermédiaire de filtres passe-bande respectivement identiques (BP2) pour les moitiés supérieures du spectre, dans les branches considérées des deux circuits de complément (2,3), et que les puissances des spectres partiels individuels présents sur les sorties des filtres passe-bande (BP1 ou BP2) sont mesurées et sont réglées, respectivement par intensification du spectre partiel de puissance plus faible ou par atténuation du spectre partiel de puissance plus élevée, à des valeurs approximativement identiques ou à une valeur légèrement supérieure du spectre partiel de puissance plus faible.

2. Circuit combinatoire suivant la revendication 1, caractérisé par l'utilisation de filtres passe-bande à deux circuits, qui ne transmettent qu'une partie de la moitié supérieure et de la moitié inférieure du spectre.

3. Circuit combinatoire suivant la revendication 2, caractérisé par le fait que le spectre partiel le plus faible est légèrement surélevé.

# FIG 1

# FIG 2

Nyquistspektrum
Rolloff =0,33

BP 1

Nyquistspektrum
Rolloff =0,33

BP 2

$f_{c1}$          $f_{c2}$          f

# FIG 3

Nyquistspektrum
Rolloff=0,2

BP1          BP2

$f_{c1}$